# EUROPÄISCHE PATENTANMELDUNG

(11) **EP 0 547 388 A2**
(43) Veröffentlichungstag der Anmeldung: **23.06.1993**
(21) Anmeldenummer: 92119654.9
(22) Anmeldetag: 19.11.1992
(51) Int. Cl.: B23B 31/10, B23B 31/16, B23Q 1/24

(54) **Mittenantriebslünette zum Abstützen einer Kurbelwelle während ihrer Bearbeitung**

(30) Priorität: 20.11.1991 DE 4138134
(71) Anmelder: Gebr. Heller Maschinenfabrik GmbH, D-72622 Nürtingen (DE)
(72) Erfinder:
(74) Vertreter: Jackisch-Kohl, Anna-Katharina

(57) **Zusammenfassung**

Die Mittenantriebslünette dient zum Abstützen einer Kurbelwelle (1) während ihrer Bearbeitung. Sie weist eine drehbar angetriebene Stützeinrichtung (24, 36, 39) auf, die zwei Spannelemente (59, 60) hat, die auf einem Träger (41) in eine Spann- und in eine Freigabestellung bewegbar angeordnet sind und die Kurbelwelle (1) im Bereich zwischen ihren Enden spannen und in ihrer Spannstellung während des Drehens der Stützeinrichtung (24, 36, 39) durch einen Antrieb (41, 45, 48, 51 bis 54) mit der erforderlichen Spannkraft beaufschlagt sind. Der Antrieb (41, 45, 46, 51 bis 54) für die Spannelemente (59, 60) hat einen Spannmotor (54) mit einer Antriebswelle (53), die über ein Getriebe (45, 48, 51) mit dem Träger (41) antriebsverbunden ist. Während der Bearbeitung der Kurbelwelle (1) wird die Antriebswelle (53) gegen das anstehende Drehmoment von der drehenden Stützeinrichtung (24, 36, 39) mitgenommen. Die Spannkraft wird über mechanische Mittel kontrolliert aufrecht-erhalten. Dadurch kann die Mittenantriebslünette auch bei hohen Drehgeschwindigkeiten der zu bearbeitenden Kurbelwelle (1) eingesetzt werden. Während der Bearbeitung der Kurbelwelle (1) wird die Spannkraft kontrolliert und entsprechend verändert.

## Beschreibung

Die Erfindung betrifft eine Mittenantriebslünette zum Abstützen einer Kurbelwelle während ihrer Bearbeitung nach dem Oberbegriff des Anspruches 1.

Es ist bekannt, Kurbelwellen zur Erhöhung der Bearbeitungsgenauigkeit und der Zerspanleistung bei der Hublagerbearbeitung im Bereich zwischen zwei Spannfuttern mittels einer Mittenantriebslünette abzustützen (DE-PS 31 01 924). Bei der Bearbeitung von exzentrisch zu spannenden Werkstücken, insbesondere von Hubzapfen an Kurbelwellen, können immer nur die auf der Drehmitte der Lünette liegenden Zapfen bearbeitet werden. Sollen alle Hubzapfen einer Kurbelwelle in einer Aufspannung bearbeitet werden, muß die Kurbelwelle um die Achse des Hauptlagers so gedreht werden, daß nacheinander alle Hubzapfen auf die Drehmitte der Mittenantriebslünette gelangen und somit bearbeitet werden können. Die Lünette verhindert Ratterneigung bei der Bearbeitung der Kurbelwelle und die dadurch hervorgerufenen schlechten Oberflächen bzw. geringen Bearbeitungsgenauigkeiten. Bei der bekannten Mittenantriebslünette sind die Spannelemente radial beweglich in einem Ringträger gelagert. Zur Verstellung der Spannelemente ist jeweils ein Hydrauliktrieb vorgesehen, die über Leitungen miteinander in Verbindung stehen und gemeinsam mit Druckmittel versorgt werden. Zur Versorgung der Hydrauliktriebe münden die Leitungen in eine Ringleitung des Trägers. Er selbst wird durch ein Schneckengetriebe drehbar angetrieben, wenn die mit den Spannelementen eingespannte Kurbelwelle während der Bearbeitung gedreht wird. Die Kurbelwelle wird durch Umfangsrundfräsen bearbeitet, bei dem lediglich mit Vorschubgeschwindigkeit gefräst wird. Die Kurbelwelle dreht darum mit nur geringer Geschwindigkeit. Bei einem Wellendurchmesser von beispielsweise 100 mm und einer Vorschubgeschwindigkeit von 1 m/min ergibt dies eine Lünetten-Drehzahl von 3,18 U/min. Bei einer so niedrigen Drehzahl ist die auf einem Durchmesser von etwa 500 mm liegende Übergabe des Hydraulikmediums vom feststehenden Teil der Lünette auf den umlaufenden Teil bezüglich der Dichtungselemente beherrschbar. Die Dichtungen laufen hierbei mit einer Geschwindigkeit von 5 m/min um.

Es sind auch umlaufende Lünetten bekannt, deren Spannsysteme mittels mechanischer selbsthemmender Übertragungselemente, z. B. Gewindespindeln oder Keilsysteme, arbeiten. Durch Ein- und Auskuppeln des Spannantriebes während des Stillstandes der Kurbelwelle werden die Spannsysteme geöffnet bzw. geschlossen. Während der Drehbewegung der Stützeinrichtung ist keine Spannkontrolle über den Spannantrieb möglich, weil er während der Drehbewegung der Stützeinrichtung ausgekuppelt ist.

Es sind auch Mittenantriebslünetten bekannt (EP-B1 0 264 476), bei denen die Spannkraft nicht durch ein selbsthemmendes Spannsystem, sondern durch Federkraft aufgebracht wird. Die Stützeinrichtung ist mit zwei schwenkbaren zweiarmigen Hebeln versehen, die jeweils durch eine Feder in die Spannstellung geschwenkt werden. Diese Spannelemente sind so an der umlaufenden Stützeinrichtung angeordnet, daß die Fliehkraft die Stützkraft unterstützt. Auch bei dieser Mittenantrieblünette ist während der Drehbewegung der Stützeinrichtung eine Spannkontrolle über den Spannantrieb nicht möglich, da die Spannelemente lediglich unter Federkraft stehen.

Der Erfindung liegt die Aufgabe zugrunde, die gattungsgemäße Mittenantriebslünette so auszubilden, daß auch bei hohen Drehgeschwindigkeiten des zu bearbeitenden Werkstückes die durch die Spannelemente ausgeübte Spannkraft in konstruktiv einfacher Weise kontrolliert aufrechterhalten werden kann.

Diese Aufgabe wird bei der gattungsgemäßen Mittenantriebslünette erfindungsgemäß mit den kennzeichnenden Merkmalen des Anspruches 1 gelöst.

Bei der erfindungsgemäßen Mittenantriebslünette wird die Spannkraft über mechanische Mittel kontrolliert aufrechterhalten. Die Antriebswelle des Spannmotors wird gegen das anstehende Drehmoment mit-gedreht, wodurch die Spannelemente während der Bearbeitung der Kurbelwelle in Spannrichtung belastet werden. Infolge der mechanischen Ausbildung kann die erfindungsgemäße Mittenantriebslünette auch bei hohen Drehgeschwindigkeiten der zu bearbeitenden Kurbelwelle eingesetzt werden. Mit dem Spannmotor wird über das Getriebe der Träger gedreht, wodurch die Spannelemente in ihre Spannstellung bewegt werden. Wird nun die Stützeinrichtung während der Bearbeitung der Kurbelwelle gedreht, dann wird auch der Träger, der Bestandteil der Stützeinrichtung ist, entsprechend gedreht. Infolge der die Kurbelwelle spannenden Spannelemente wird beim Drehen der Stützeinrichtung der Träger mitgenommen. Dadurch wird die Antriebswelle des Spannmotors gegen das anstehende Drehmoment mit-gedreht. Während der Bearbeitung der Kurbelwelle wird die Spannkraft kontrolliert und, falls erforderlich, entsprechend verändert. Auf diese Weise werden die Spannelemente während des Drehens der Stützeinrichtung durch den Spannmotor und das Getriebe ständig in Spannrichtung belastet, so daß sichergestellt ist, daß die Kurbelwelle während ihrer Bearbeitung zuverlässig gespannt und abgestützt wird. Es besteht nicht die Gefahr, daß die Spannkraft nachläßt und ein Rattern der Kurbelwelle zu befürchten ist.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Figur 1: in Seitenansicht eine erfindungsgemäße Mittenantriebslünette, die im Bereich zwischen zwei Spindelstöcken angeordnet ist,
- Figur 2: in vergrößerter Darstellung und in Stirnansicht den einen Spindelstock gemäß Figur 1 mit der zu bearbeitenden Kurbelwelle,
- Figur 3: in vergrößerter und schematischer Darstellung in Stirnansicht einen Teil der erfindungsgemäßen Mittenantriebslünette,
- Figur 4: in Seitenansicht und in schematischer Darstellung einen Antrieb der erfindungsgemäßen Mittenantriebslünette.

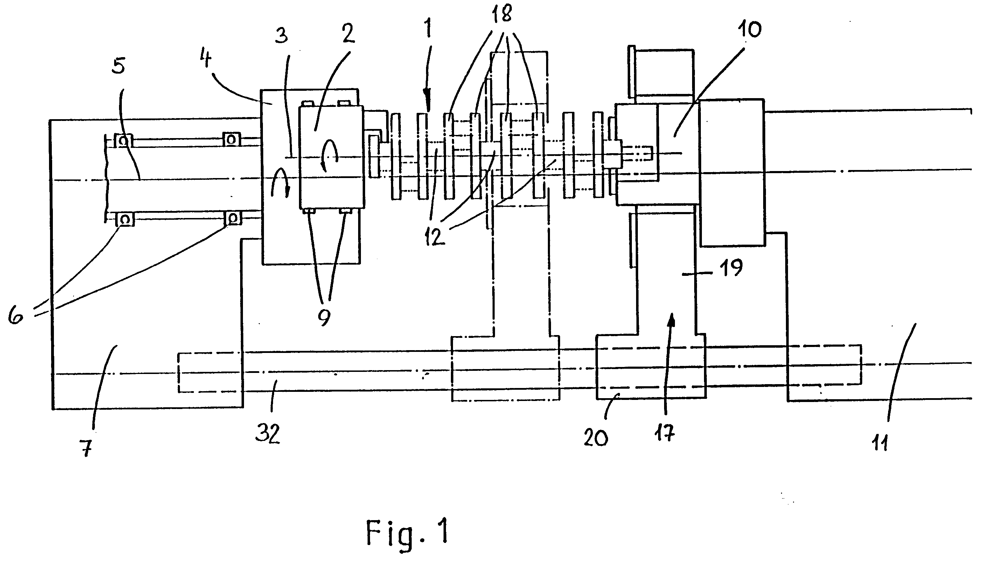

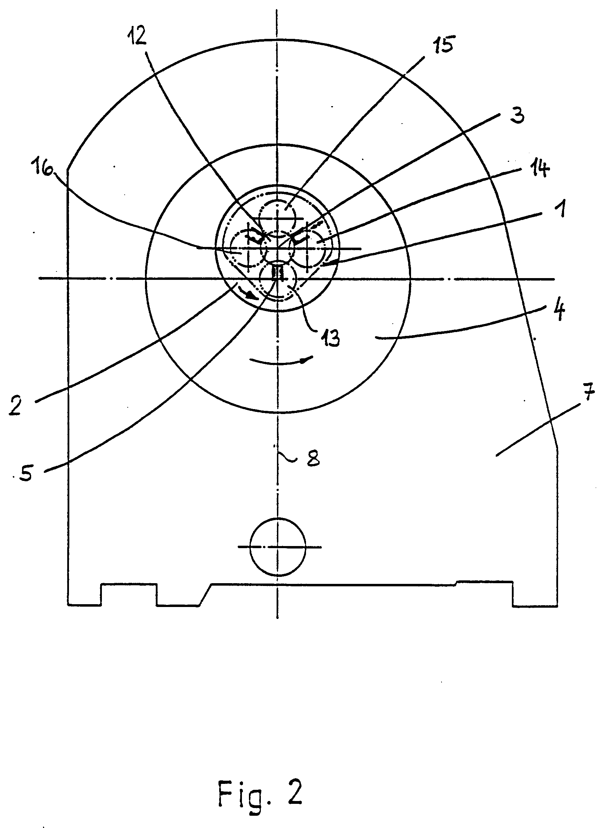

Wie Figur 1 zeigt, wird die zu bearbeitende Kurbelwelle 1 mit ihrem einen Ende in ein Teilfutter 2 eingespannt, das um eine Achse 3 drehbar ist. Das Teilfutter 2 ist in einem Grundfutter 4 drehbar gelagert (Figuren 1 und 2), das seinerseits um eine parallel zur Achse 3 liegende Achse 5 drehbar ist. Das Grund- bzw. Spannfutter 4 ist über Lager 6 drehbar in einem Spindelstock 7 gelagert. Die beiden Drehachsen 3 und 5 liegen in einer gemeinsamen Vertikalebene 8 (Figur 2). Das Teilfutter 2, das mit Lagern 9 im Grundfutter 4 drehbar gelagert ist, ist bei der Bearbeitung der Kurbelwelle 1 in bekannter Weise unverdrehbar im Grundfutter verspannt und verriegelt und läuft mit dem Grundfutter um.

Die Kurbelwelle 1 ist am anderen Ende in einem Exzenter-Spannfutter 10 eines Spindelstockes 11 eingespannt.

Die Kurbelwelle 1 ist im Ausführungsbeispiel so eingespannt, daß die Achsen der Hauptlager 12 in der Drehachse 3 des Teilfutters 2 liegen (Figuren 1 und 2). Die Hubzapfen 13 bis 16 sind um 90° zueinander versetzt angeordnet, in Achsrichtung der Kurbelwelle 1 gesehen. Der jeweils zu bearbeitende Hubzapfen wird durch Verstellen des Teilfutters in eine solche Lage gebracht, daß die Achse des jeweils zu bearbeitenden Hubzapfens in der Drehachse 5 der Grund- bzw. Spannfutter 4 und 10 liegt. Während der Bearbeitung der Hublager bzw. Hubzapfen 13 bis 16 wird die Kurbelwelle 1 im Bereich zwischen den beiden Spindelstöcken 7 und 11 durch eine umlaufende Mittenantriebslünette 17 abgestützt. Die Abstützstellung der Lünette 17 ist in Figur 1 mit strichpunktierten Linien dargestellt. Um alle Hubzapfen 13 bis 16 in einer Aufspannung bearbeiten zu können, wird die Kurbelwelle 1 um die Achse der Hauptlager 12 so gedreht, daß nacheinander alle Hubzapfen mit ihrer Achse auf der Drehachse 5 liegen und somit bearbeitet werden können. Durch die Abstützung der Kurbelwelle 1 mittels der Lünette 17 wird ein Rattern der Kurbelwelle bei der Bearbeitung zuverlässig vermieden, so daß eine hohe Bearbeitungsgenauigkeit und eine hohe Zerspanleistung erreicht wird.

Die Lünette 17 läuft synchron mit den beiden Spannfuttern 4 und 10 um und weist die gleiche Exzentrität in derselben Ebene auf. Die Abstützung der Kurbelwelle 1 erfolgt durch zentrierende Backen, welche die Kurbelwelle am jeweiligen vorbearbeiteten Hauptlager 12 spannen. Darum sind keine bearbeiteten Hilfsflächen an den Wangen 18 der Kurbelwelle 1 notwendig.

Die Lünette 17 hat ein Gehäuse 19 mit einem Fuß 20. Das Gehäuse 19 hat eine Durchtrittsöffnung 21, deren Querschnittsfläche so groß ist, daß die Lünette 17 über die Kurbelwelle gefahren werden kann. Die Durchtrittsöffnung 21 wird von einer Nabe 22 eines Zahnrades 23 begrenzt. Die Nabe 22 wird im wesentlichen durch zwei Ringe 24 und 25 gebildet, die zu beiden Seiten des Zahnrades 23 angeordnet und drehfest mit ihm verbunden sind. Der Ring 25 hat einen radial nach außen gerichteten Flansch 26, mit dem er in eine ringförmige, stirnseitige Vertiefung 27 des Gehäuses 19 eingreift. Die Drehachse 28 des Zahnrades 23 bildet die Achse der Durchtrittsöffnung 21, welche das Zahnrad 23 durchsetzt. Der Ring 24 sitzt drehbar auf einem Lager 29 des Gehäuses 19.

Das Zahnrad 23 ist in Eingriff mit einem Zwischenrad 30, das mit einem Ritzel 31 einer Synchronwelle 32 kämmt. Das Zwischenrad 30 hat einen Wellenstummel 33, der über Lager 34 drehbar im Gehäuse 19 gelagert ist. Die Synchronwelle 32, welche den Fuß 20 des Gehäuses 19 durchsetzt, ist im Fuß 20 mit Lagern 35 drehbar gelagert. Wie Figur 1 zeigt, erstreckt sich die Synchronwelle 32 zwischen den beiden Spindelstöcken 7 und 11, von denen sie drehbar angetrieben wird.

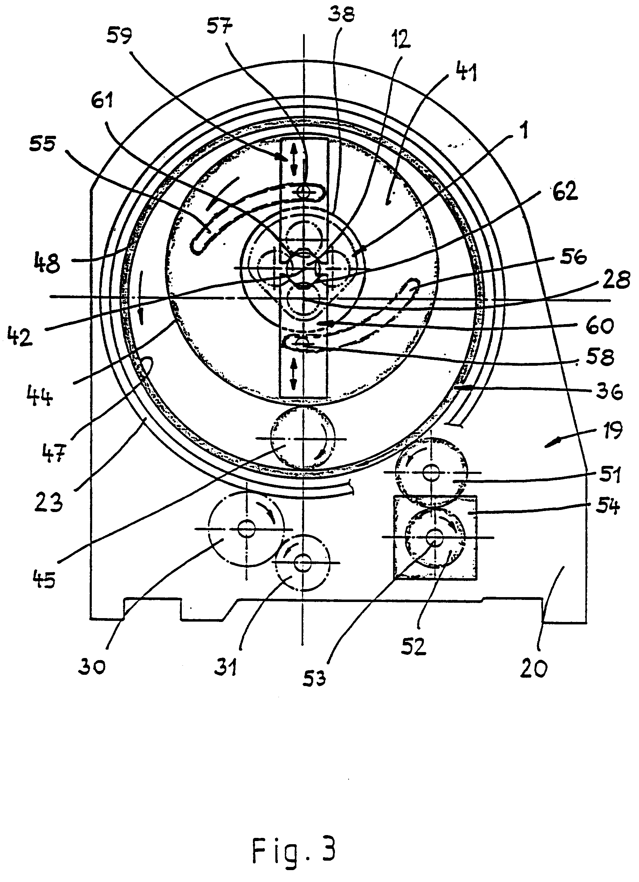

Mit dem Ring 24 ist über eine Ringscheibe 39 drehfest eine Spannscheibe 36 verbunden, die beide über den Ring 24 ebenfalls auf dem Lager 29 drehbar gelagert sind. Der Ring 24, die Spannscheibe 36 und die Ringscheibe 39 bilden eine Stützeinrichtung. Die Spannscheibe 36 hat einen umlaufenden flanschartigen Rand 37, der sich in Richtung auf das Gehäuse 19 erstreckt. Die Spannscheibe 36 selbst befindet sich im wesentlichen im Bereich vor dem Gehäuse 19. Die Spannscheibe 36 und die Ringscheibe 39 haben eine Durchtrittsöffnung 38, die zum Durchtritt der zu bearbeitenden Kurbelwelle 1 dient und exzentrisch in der kreisförmigen Spannscheibe vorgesehen ist. Die Durchtrittsöffnung 38 hat kleineren Querschnitt als die Durchtrittsöffnung 21 des Gehäuses 19. Auf der dem Gehäuse 19 zugewandten Seite ist die Spannscheibe 36 an der Ringscheibe 39 drehfest befestigt, der mit Abstand die Spannscheibe 36 gegenüberliegt und einen Aufnahmeraum 40 für eine Exzenterscheibe 41 begrenzt. Sie ist kreisförmig ausgebildet (Figur 3) und exzentrisch in bezug auf die Spannscheibe 36 angeordnet. Die Drehachse 42 der Exzenterscheibe 41 liegt mit Abstand zur Drehachse 28 der Spannscheibe 36. Die Exzenterscheibe 41 liegt axial gesichert zwischen der Spannscheibe 36 und der Ringscheibe 39, die mit einem radial inneren flanschartigen Rand 43, der die Durchtrittsöffnung 38 begrenzt, an die Spannscheibe 36 anschließt.

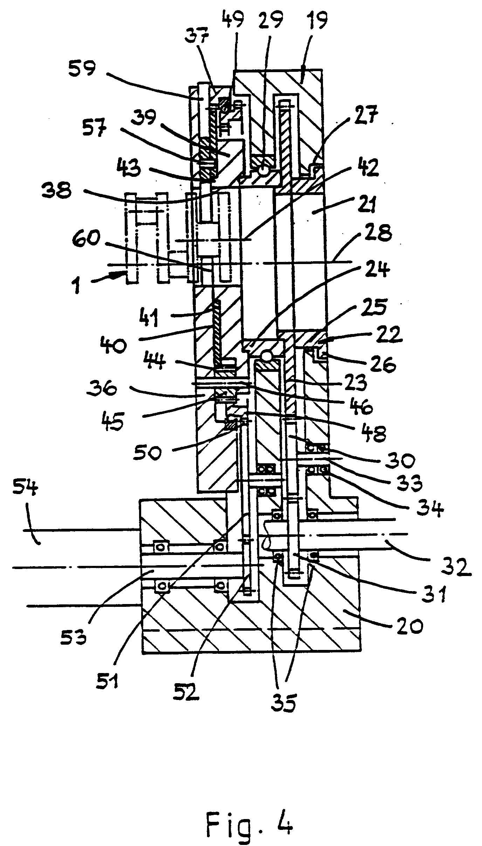

Die Exzenterscheibe 41 hat eine Außenverzahnung 44, in die ein Zwischenrad 45 eingreift, das auf einem in der Spannscheibe 36 und in der Ringscheibe 39 gelagerten Wellenstummel 46 sitzt. Das Zwischenrad 45 greift in eine Innenverzahnung 47 eines Innenringes 48 ein, der über ein Lager 49 (Figur 4) am Rand 37 der Spannscheibe 36 drehbar gelagert ist. Der Innenring 48 hat eine Außenverzahnung 50, in die ein Zahnrad 51 eingreift, das im Gehäuse 19 drehbar gelagert ist und im Bereich zwischen der Spannscheibe 36 und dem Gehäuse 19 liegt. Das Zahnrad 51 ist in Eingriff mit einem Zahnrad 52, das drehfest auf einer Antriebswelle 53 eines Spannmotors 54 sitzt. Die Antriebswelle 53 ist im Fuß 20 des Gehäuses 19 drehbar gelagert. Der Spannmotor 54 ist vorteilhaft an die Stirnseite des Fußes 20 angeflanscht.

Die Exzenterscheibe 41 weist, wie Figur 3 zeigt, zwei teilkreisförmig gekrümmte Führungsschlitze 55 und 56 auf, die diametral einander gegenüberliegend angeordnet sind und jeweils spiralförmig verlaufen. Dreht sich die Exzenterscheibe 41 im Gegenuhrzeigersinn, dann verlaufen die Führungsschlitze 55, 56 von ihrem inneren Ende aus in Drehrichtung teilkreisförmig nach außen. In die Führungsschlitze 55, 56 greift jeweils ein Mitnehmerstein 57 und 58 eines Schiebers 59 und 60 ein. Sie sind geradlinig verschiebbar in der Spannscheibe 36 gelagert und liegen, wie Figur 4 zeigt, axial gesichert zwischen der Spannscheibe 36 und der Exzenterscheibe 41. Die Schieber 59, 60 sind als Spannbacken ausgebildet, deren einander zugewandten, innenliegenden Schmalseiten etwa V-förmige Vertiefungen 61 und 62 (Figur 3) aufweisen. Die Mitnehmersteine 57, 58 haben kreisförmigen Querschnitt, so daß sie leichtgängig in den Führungsschlitzen 55, 56 verschoben werden können. Infolge der V-förmigen Vertiefungen 61, 62 können die Schieber 59, 60 die Kurbelwelle 1 am Hauptlager 12 einwandfrei spannen.

Zum Spannen bzw. Freigeben der Kurbelwelle 1 wird der Spannmotor 54 eingeschaltet, wodurch über die Antriebswelle 53, die Zahnräder 51, 52, den Innenring 48 und das Zwischenrad 45 die Exzenterscheibe 41 um ihre Achse gedreht wird. Je nach Drehrichtung der Exzenterscheibe 41 werden die Schieber 59, 60 infolge des Eingriffs der Mitnehmersteine 57, 58 in die Führungsschlitze 55, 56 der Exzenterscheibe radial nach innen oder außen verschoben. In der in Figur 3 dargestellten Lage sind die Schieber 59, 60 radial nach innen verschoben und spannen die Kurbelwelle 1 an einem der Hauptlager 12. Wird in dieser Lage die Exzenterscheibe 41 im Uhrzeigersinn um ihre Achse 42 gedreht, werden die Schieber 59, 60 über den beschriebenen Antrieb radial nach außen so weit verschoben, daß die spannseitigen Enden der Schieber außerhalb der Durchtrittsöffnung 38 der Spannscheibe 36 liegen.

Anstelle der zwei Schieber 59, 60 kann die Lünette 17 auch drei oder mehr Schieber aufweisen, wobei die Exzenterscheibe 41 eine entsprechende Zahl von Führungsschlitzen 55, 56 aufweist.

Das Zahnrad 23 und der Innenring 48 haben die gemeinsame Achse 28.

Befindet sich die Lünette 17 in ihrer mit strichpunktierten Linien in Fig. 1 dargestellten Abstützposition, dreht die Spannscheibe 36 um ihre Achse 28,die mit der Drehachse 5 zusammenfällt. Der Antrieb wird hierbei von der Synchronwelle 32 abgeleitet, so daß sichergestellt ist, daß die Spannscheibe 36 synchron mit der Kurbelwelle 1 dreht, die in bekannter Weise während der Bearbeitung drehbar angetrieben wird. Wird die Synchronwelle 32 stillgesetzt, wird auch die Spannscheibe 36 nicht mehr um ihre Achse gedreht. Nunmehr kann mittels des Spannmotors 54 die Exzenterscheibe 41 über den beschriebenen Antrieb 45, 48, 51, 52 im Uhrzeigersinn gedreht werden (Fig. 3). Die Schieber 59, 60 werden dadurch über die Mitnehmersteine 57, 58 radial nach außen geschoben, wodurch die Kurbelwelle 1 freigegeben wird. Da die Schieber 59, 60 so weit nach außen gefahren werden können, daß ihre spannseitigen Enden außerhalb der Durchtrittsöffnung 38 liegen, kann nunmehr die Lünette 17 aus ihrer Abstützposition in die in Fig. 1 mit ausgezogenen Linien dargestellte Parkstellung über das linke bzw. rechte Spannfutter 4 bzw. 10 verfahren werden. Nach Einlegen der jeweils zu bearbeitenden Kurbelwelle 1 in die Spannfutter wird die Lünette 17 wiederum aus ihrer Parkstellung in die jeweilige Abstützposition verfahren. Durch Drehrichtungsumkehr des Spannmotors 54 werden anschließend die Schieber 59, 60 durch Drehen der Exzenterscheibe 41 im Gegenuhrzeigersinn wieder geschlossen und die Kurbelwelle 1 am Hauptlager 12 gespannt und abgestützt.

Nach dem Spannvorgang liegt am Spannmotor 54 ein einstellbares Drehmoment an, so daß die Schieber 59, 60 ständig über den beschriebenen Antrieb und die Exzenterscheibe 41 in ihre Spannstellung gedrückt werden. Wird nun über die Synchronwelle 32 und das Getriebe 31, 30, 23 eine Drehbewegung entsprechend der Bearbeitungsgeschwindigkeit in die Spannscheibe 36 eingeleitet und diese ebenfalls im Gegenuhrzeigersinn gedreht, wird die Antriebswelle 53 des Spannmotors 54 gegen das anstehende Drehmoment mitgedreht, da infolge der die Kurbelwelle 1 spannenden Schieber 59, 60 die Exzenterscheibe 41 mitgenommen wird. Da die Antriebswelle 53 des Spannmotors 54 gegen das anstehende Drehmoment mitgedreht wird, wirkt der Spannmotor 54 als Bremse, wobei während der Bearbeitung der Kurbelwelle 1 die Spannkraft kontrolliert und, wenn notwendig, verändert werden kann. Die Schieber 59, 60 werden während der Bearbeitung der Kurbelwelle 1 und somit während des Drehens der Spannscheibe 36 durch den Spannmotor 54 und das beschriebene Getriebe ständig in Spannrichtung belastet, so daß sichergestellt ist, daß die Kurbelwelle 1 während ihrer Bearbeitung zuverlässig gespannt und abgestützt wird. Da der Spannmotor 54 in der beschriebenen Weise als Bremse und damit als Generator wirkt, wird zweckmäßigerweise die vom Spannmotor abgegebene Leistung ins Stromnetz zurückgespeist.

Die Spannkraft, die von den Schiebern 59, 60 während der Kurbelwellenbearbeitung ausgeübt wird, kann durch den Spannmotor 54 in der beschriebenen Weise beeinflußt werden. Der Spannantrieb wird nicht ein- und ausgekuppelt, sondern bleibt während der Kurbelwellenbearbeitung ständig im Eingriff. Der Spannmotor 54 kann ein Elektromotor oder ein Hydraulikmotor sein. Mit der Mittenantriebslünette 17 ist während der Drehbewegung der Kurbelwelle 1 bei der Bearbeitung eine Spannkontrolle gewährleistet. Da die Spannkraft gegebenenfalls während der Bearbeitung durch entsprechende Erhöhung des Drehmomentes des Spannmotors 54 verstärkt oder verringert werden kann, ist eine einwandfreie Kontrolle über die Spannkräfte sichergestellt.

## Patentansprüche

1. Mittenantriebslünette zum Abstützen einer Kurbelwelle während ihrer Bearbeitung, mit einer drehbar angetriebenen Stützeinrichtung, die wenigstens zwei Spannelemente aufweist, die auf einem Träger in eine Spann- und in eine Freigabestellung bewegbar angeordnet sind, die Kurbelwelle im Bereich zwischen ihren Enden spannen und in ihrer Spannstellung während des Drehens der Stützeinrichtung durch einen Antrieb mit der erforderlichen Spannkraft beaufschlagt sind, dadurch gekennzeichnet, daß der Antrieb (41, 45, 48, 51 bis 54) für die Spannelemente (59, 60) einen Spannmotor (54) mit einer Antriebswelle (53) aufweist, die über ein Getriebe (45, 48, 51) mit dem Träger (41) antriebsverbunden ist und während der Bearbeitung der Kurbelwelle (1) gegen das anstehende Drehmoment von der drehenden Stützeinrichtung (24, 36, 39) mitgenommen wird.

2. Mittenantriebslünette nach Anspruch 1,
dadurch gekennzeichnet, daß der Träger (41) eine Exzenterscheibe ist, die relativ zur Stützeinrichtung (24, 36, 39) drehbar ist.

3. Mittenantriebslünette nach Anspruch 1 oder 2,
dadurch gekennzeichnet, daß der Träger (41) Führungen (55, 56), vorzugsweise Schlitze, für Mitnehmer (57, 58) der Spannelemente (59, 60) aufweist.

4. Mittenantriebslünette nach Anspruch 3,
dadurch gekennzeichnet, daß die Führungen (55, 56) spiralförmig verlaufen.

5. Mittenantriebslünette nach einem der Ansprüche 1 bis 4,
dadurch gekennzeichnet, daß die Spannelemente (59, 60) Schieber sind, die in der Stützeinrichtung (24, 36, 39) gesteuert zwischen der Spann- und der Freigabestellung verstellbar sind.

6. Mittenantriebslünette nach einem der Ansprüche 1 bis 5,
dadurch gekennzeichnet, daß der Träger (41) eine Außenverzahnung (44) aufweist, in die ein an der Stützeinrichtung (24, 36, 39) gelagertes Zahnrad (45) eingreift, das in eine Innenverzahnung (47) eines Innenringes (48) eingreift, der mit dem Spannmotor (54) antriebsverbunden ist.

7. Mittenantriebslünette nach einem der Ansprüche 1 bis 6,
dadurch gekennzeichnet, daß die Stützeinrichtung eine Spannscheibe (36) aufweist, an der der Träger (41) relativ drehbar gelagert ist.

8. Mittenantriebslünette nach einem der Ansprüche 1 bis 7,
dadurch gekennzeichnet, daß die Stützeinrichtung (24, 36, 39) über eine Synchronwelle (32) mit Spindelstöcken (7, 11) einer Bearbeitungsmaschine antriebsverbunden ist, deren Spannfutter (4, 10) synchron mit der Stützeinrichtung (24, 36, 39) drehen.

9. Mittenantriebslünette nach Anspruch 7 oder 8,
dadurch gekennzeichnet, daß die Spannscheibe (36) eine Durchtrittsöffnung (38) aufweist.

10. Mittenantriebslünette nach einem der Ansprüche 1 bis 9,
dadurch gekennzeichnet, daß die Drehachse (42) des Trägers (41) mit der Achse des jeweiligen Hauptlagers (12) der Kurbelwelle (1) zusammenfällt.

11. Mittenantriebslünette nach einem der Ansprüche 1 bis 10,
dadurch gekennzeichnet, daß die Drehachse (28) der Stützeinrichtung (24, 36, 39) mit der Achse des jeweils zu bearbeitenden Hubzapfens (13 bis 16) der Kurbelwelle (1) zusammenfällt.

12. Mittenantriebslünette nach einem der Ansprüche 8 bis 11,
dadurch gekennzeichnet, daß die Synchronwelle (32) ein Gehäuse (19, 20) der Mittenantriebslünette (17) durchsetzt.
